# EUROPÄISCHE PATENTSCHRIFT

(11) **EP 2 250 588 B1**
(45) Veröffentlichungstag und Bekanntmachung des Hinweises auf die Patenterteilung: **07.09.2011**
(21) Anmeldenummer: 09716698.7
(22) Anmeldetag: 27.02.2009
(51) Int. Cl.: G06F 17/30

(54) **VERFAHREN UND PROGRAMM ZUM BEREITSTELLEN VON DATENKOHÄRENZ IN NETZWERKEN**
METHOD AND PROGRAM FOR PROVIDING DATA COHERENCE IN NETWORKS
PROCÉDÉ ET PROGRAMME DE FOURNITURE DE COHÉRENCE DE DONNÉES DANS DES RÉSEAUX

(30) Priorität: 06.03.2008 DE 102008012979
(43) Veröffentlichungstag der Anmeldung: 17.11.2010
(73) Patentinhaber: GIP AG, 55130 Mainz (DE)
(72) Erfinder: EBBES, Alexander, 55268 Nieder-Olm (DE); REIFENHÄUSER, Bernd, 55131 Mainz (DE)
(74) Vertreter: WSL Patentanwälte
(86) Internationale Anmeldenummer: PCT/EP2009/052418
(87) Internationale Veröffentlichungsnummer: WO 2009/109535

(56) Entgegenhaltungen:
- US-A1- 2003 028 695
- US-B1- 6 529 921

## Beschreibung

Die vorliegende Erfindung betrifft ein Verfahren und ein Programm zum Bereitstellen von Kohärenz zwischen Instanzen von Datenobjekten, die auf verteilten Knoten eines nicht speichergekoppelten Netzwerkes residieren.

Im Stand der Technik sind insbesondere Verfahren für eine sogenannte Cachekohärenz auf Parallelrechnern bekannt, bei welchen mehrere Prozessoren jeweils einen eigenen zugeordneten Cachespeicher aufweisen und Speicher und Prozessoren typischerweise über einen Bus miteinander verbunden sind. Cachekohärenz wird aufrecht erhalten durch Überwachung des Zugriffs auf einen gemeinsamen Speicher oder zumindest einen gemeinsamen Speicheradressraum, wie z. B im Falle eines verteilten Speichers, und durch Zuordnen von die Kohärenz bestimmenden Zuständen einzelner Cachezeilen (Cachelines). Dabei wird zum Beispiel das sogenannte MESI-Protokoll verwendet, wobei MESI die Abkürzung für Modified Exclusive Shared Invalid ist, wobei jeder der vorgenannten Begriffe jeweils einen Zugriffszustand eines Datenobjektes definiert, woraus sich wiederum die jeweils aktuellste Version einer Cacheline ergibt, wie es Fachleuten auf diesem Gebiet allgemein bekannt ist.

Durch Überwachung des Speicherzugriffs kann jeder Prozessor bzw. jede Kontrolllogik eines Cachespeichers feststellen, ob irgendeine der Kopien einer Cacheline modifiziert bzw. überschrieben worden ist, was in der Regel dazu führt, dass etwaige weitere Kopien in anderen Cachespeichern für ungültig (invalid) erklärt werden, auf die dementsprechend nicht mehr zugegriffen werden kann. Auf diese Weise wird sichergestellt, dass jeder Prozessor immer nur auf die jeweils aktuellste Cachezeile zugreift.

Datenobjekte, die in nicht speichergekoppelten Netzwerken ausgetauscht und von mehreren Nutzern bzw. Knoten gehalten und gegebenenfalls modifiziert werden, liegen hingegen nicht in Form von Cachezeilen vor, sondern haben eine im Prinzip beliebige von Hardware und Anwendungsprogramm abhängige Struktur. Eine Überwachung des Datenverkehrs oder gar der lokalen Speicherzugriffe ist gerade bei großen und weit verteilten Netzwerken, wie z. B. im Internet, zwischen allen für die Bearbeitung eines konkreten Datenobjektes in Frage kommenden Knoten in der Praxis nicht durchführbar, so dass die auf Cacheline-Kohärenz beruhenden und von speichergekoppelten Netzwerken bekannten Verfahren nicht auf derartige Netze zu übertragen sind.

Andererseits besteht aber ein erheblicher Bedarf daran, dass gegebenenfalls weit voneinander entfernte Benutzer, die über ein WAN (Wide Area Net) bzw. das Internet miteinander verbunden sind, gemeinsam an ein und demselben, oftmals komplexen Datenobjekt arbeiten und für diesen Zweck jeweils eine Instanz eines Datenobjektes auf ihrem lokalen Knoten speichern bzw. herunterladen müssen. Auch in Form eines Intranets verbundene Rechner bzw. Knoten eines größeren Firmennetzwerkes können die Cachekohärenzverfahren nicht oder nur mit erheblichem Aufwand bezüglich der Überwachung des Datenverkehrs und in erheblich modifizierter Form übernehmen, so dass auch hier der Bedarf an einem verbesserten Verfahren zum Bereitstellen von Datenkohärenz besteht. Viele Firmen haben auch verteilte Standorte, die nur über das Internet miteinander verbunden sind, wobei aber dennoch Nutzer bzw. Mitarbeiter an verschiedenen Standorten und gegebenenfalls auch mobile Nutzer, die sich irgendwo unterwegs über das Internet anschließen, an ein und demselben Datenobjekt arbeiten müssen und hierfür jeweils eine Instanz des Datenobjektes, und zwar die jeweils aktuellste Instanz laden müssen.

Beispielsweise ist es durchaus üblich, dass sehr umfangreiche Dokumente teilweise von mehreren Benutzern erzeugt und bearbeitet werden, die an sehr weit voneinander entfernten Orten tätig sind und dasselbe Objekt bearbeiten, wobei es unverzichtbar ist, dass die verschiedenen Instanzen eines solchen Datenobjektes immer kohärent gehalten werden. Ein entsprechendes, relativ komplexes Dokument wäre zum Beispiel ein Dokument, das eine Schnittstellenvereinbarung beschreibt und definiert.

In der US 2003/0028695 A1 wird die Anwendung einer verteilten Speicherverwaltung auf ein verteiltes Dateisystem beschrieben. Das System bietet eine Netzsynchronisierung, die für eine sequentielle Konsistenz mit einem Write-Back Cash konzipiert ist, so wie es typisch für verteilte Dateisysteme ist. Eine zweite Netzsynchronisierung ist für eine sequentielle Konsistenz ohne Cashing für Anwendungen vorgesehen, die ihre eigenen Cashs verwalten. Darüber hinaus sind Netzsynchronisierungen vorgesehen, die ein weicheres Konsistenzmodell zu dem Write-Back Cashing implementieren, das für eine effiziente Replizierung und Verteilung von Daten konstruiert ist. Netzsynchronisierungen zur Replizierung sind geeignet zum Bereitstellen von dynamischen Daten in dem Internet und anderen hochgradig simultanen Anwendungen. Die Auswahl des passenden Netzsynchronisierungsprotokolls für jede Datei wird eingestellt, wobei die Metadaten der Datei verwendet werden. Darüber hinaus ist eine Netzsynchronisierung offenbart, welche zwei Netzsynchronisierungen für ganze Dateien verwendet: eine Erzeugernetzsynchronisierung P und eine Empfängernetzsynchronisierung C. Irgendein Client kann eine Empfängernetzsynchronisierung halten und wenn er eine Empfänger netzsynchronisierung hält, kann er Daten lesen und Daten zum Lesen cashen. Die Erzeugernetzsynchronisierung wird nur von einem einzigen Schreiber gehalten und ein Schreiber, der eine Erzeugernetzsynchronisierung hält, kann Daten schreiben, zuordnen und Daten zum Schreiben cashen.

Angesichts dieses Standes der Technik liegt der vorliegenden Erfindung die Aufgabe zugrunde, ein Verfahren und ein Programm zum Bereitstellen von Kohärenz entsprechend der eingangs genannten Merkmale zu schaffen, welches eine Kohärenz zwischen im Prinzip beliebigen Datenobjekten bzw. Instanzen von Datenobjekten erlaubt, dabei weitgehend frei skalierbar ist und auch keinen zentralen Speicher oder Server für die Datenobjekte benötigt.

Hinsichtlich des eingangs genannten Verfahrens wird diese Aufgabe dadurch gelöst, dass zu jeder von einem Knoten bearbeiteten Instanz eines Datenobjektes plattformunabhängige, eindeutige Metadaten erzeugt werden und über ein Kohärenzprotokoll mindestens zwischen allen eine Instanz des jeweiligen Datenobjektes haltenden Knoten des Netzwerkes kommuniziert werden.

Es versteht sich, dass diese Kommunikation dabei nicht notwendigerweise instantan erfolgen muss, so dass es ausreichen kann, wenn eine entsprechende Kommunikation jeweils spätestens dann erfolgt, wenn ein Knoten eine Instanz des betreffenden Datenobjektes aufruft.

Die jeweils zu einer Instanz eines Dokumentes erzeugten, plattformunabhängigen und eindeutigen (d. h. für die Instanz des Datenobjektes eindeutigen) Metadaten haben auch bei beliebig großen Datenobjekten nur einen relativ begrenzten (konstant großen) Umfang und sind ohne nennenswerte Belastung des Netzes kommunizierbar, wobei das Hauptaugenmerk weniger auf einer etwaigen Belastung des Netzes liegt, sondern primär auf die Reduzierung des Kohärenzverkehrs zwischen den Knoten des Netzes gerichtet ist. Tatsächlich müssen auch nicht die Metadaten komplett zwischen den Knoten kommuniziert werden, sondern es reicht gemäß einer Ausführungsform der Erfindung aus, wenn durch das Kohärenzprotokoll Zustandsübergänge der Zustandsautomaten sowie die zugehörigen auf den Datenobjekten ausgeführten Operationen (Lesen, Schreiben, Löschen, ...) mindestens zwischen allen eine Instanz des jeweiligen Datenobjektes haltenden Knoten des Netzwerkes kommuniziert werden.

Die einzelnen beteiligten Rechner und Anwendungen, ebenso wie die Knoten eines entsprechenden Kohärenznetzes, benötigen zum Erhalt der Kohärenz der Datenobjekte also einen erheblich verminderten Datenverkehr und -durchsatz und entsprechend verminderten Zeit- und Rechenaufwand als dies bisher zum Erhalt der Kohärenz mit bekannten Methoden möglich war.

Erfindungsgemäß erhält jeder Knoten, der für eine Bearbeitung oder auch nur zum Lesen das betreffende Datenobjekt aufruft, die Metadaten und damit die Information, welche Instanz die jeweils aktuelle ist. Aufgrund der eindeutigen Zuordnung der Metadaten zu den jeweiligen Instanzen des Objektes erhält der Knoten damit auch die aktuelle Version dieses Datenobjektes bzw. die Angaben der Adresse bzw. des Speicherortes der aktuellen Instanz des Datenobjektes und kann dann diese aktuelle Instanz beschaffen.

Dabei enthalten gemäß einer Ausführungsform die Metadaten einen dem Kohärenzprotokoll entsprechenden Zustandsautomaten. Zustandsautomaten bilden einen Teil der Metadaten, in denen sich jeder Zugriff auf ein Datenobjekt in charakteristischer Weise wiederspiegelt. Sie sind deshalb besonders geeignet, die Kohärenz von Datenobjekten zu vermitteln.

Das gemeinsame Kohärenzprotokoll wird unabhängig von der lokalen Hard- und Software von allen das Datenobjekt potentiell handhabenden Knoten richtig erzeugt und interpretiert, auch wenn die einzelnen Knoten sehr unterschiedliche Hardware- und Softwarekomponenten zum Handhaben der Datenobjekte aufweisen mögen. Unter Handhabung von Datenobjekten wird im Übrigen jeder Vorgang verstanden, der mit einem Aufruf oder Speichern des Datenobjektes verknüpft ist, d. h. jede Anforderung zum Lesen, zum Besitzen, zum Modifizieren und zum Schreiben bzw. Speichern.

Weiterhin ist gemäß einer Ausführungsform vorgesehen, das Kohärenzprotokoll so auszugestalten, dass die das Kohärenzprotokoll verwendenden Knoten ein Overlay-Netzwerk bilden können.

Dabei ist gemäß einer Ausführungsform der Erfindung vorgesehen, dass ein das Overlay-Netzwerk definierender Dienst bereitgestellt wird, der eine Anforderung und Übermittlung von Datenobjekten zwischen mindestens einem Teil der Knoten des Overlay-Netzwerkes erlaubt. Dieser Dienst enthält die notwendigen Softwarekomponenten für die Adressierung entfernter Knoten, für die Implementierung des Kohärenzprotokolls, das Lesen, Senden und Empfangen der Metadaten und die Schnittstellen zu lokalen Speichern und Dateisystemen wie zum Netzwerk.

Insbesondere definiert der Dienst also eine Schnittstelle zwischen einem Anwendungsprogramm und dem Kohärenznetz.

Dabei kann der Dienst auch Teil eines Anwendungsprogramms für die jeweiligen Datenobjekte sein.

Das dem Overlay-Netzwerk zugrundeliegende Netz kann gemäß einer Ausführungsform das Internet sein und auch das Overlay-Netzwerk kann dabei das Internetprotokoll verwenden. Auf diese Weise kann man auf weit verbreitete Standards zurückgreifen und der Aufwand zur Herstellung eines entsprechenden Dienstprogramms wird hierdurch reduziert.

Dabei kann gemäß einer Ausführungsform die Kommunikation gemäß dem SIP (Session Initiation Protokoll) oder http-Standard erfolgen.

Die Erfindung kann insbesondere eingesetzt werden für Datenobjekte, die jeweils unter mindestens einer Anwendung ein vollständiges Datenobjekt darstellen, im Gegensatz zu Cachelines, die in der Regel nur Bruchstücke oder jedenfalls durch eine konkrete Anwendung nicht handhabbare Teile eines Datenobjekts enthalten. Beispiele für solche vollständigen Datenobjekte sind Textdokumente, Grafiken, Tabellen, Audiodateien, Filmdateien, Streamsegmente, Softwareprogramme, Unterprogramme bzw. Programmroutinen und andere Datenobjekte, die jeweils von einer auf einem Knoten oberhalb der Betriebssystemebene installierten Anwendung gehandhabt werden.

Weiterhin ist die Benutzung der vorliegenden Erfindung insbesondere für Anwendungen vorgesehen, die für das Datenobjekt mindestens eine sequenzielle Darstellungsform definieren, was in der Regel notwendig ist, um das Datenobjekt über das Netz übertragen zu können.

Gemäß einer Ausführungsform ist die Benutzung des erfindungsgemäßen Verfahrens für Anwendungen vorgesehen, welche die Datenobjekte im Java, .NET- oder XML-Format austauscht.

Eine Ausgestaltung des erfindungsgemäßen Verfahrens sieht weiterhin vor, das jede Instanz eines Datenobjektes Verweise auf alle Knoten enthält, die ihrerseits eine Instanz dieses Datenobjektes halten. Dies ermöglicht es, dass bei jedem lokalen Aufruf des Datenobjektes automatisch alle Knoten mit den entsprechenden Metadaten versorgt werden, die ihrerseits eine Instanz eines Datenobjektes halten, so dass sichergestellt ist, dass jeder Knoten über einen Aufruf des Datenobjektes auf einem anderen Knoten informiert wird.

Gemäß einer Weiterbildung der Erfindung kann insbesondere ein als Kohärenzobjekt bezeichnetes Datenobjekt erstellt werden, das im Wesentlichen aus einer Liste von auf den Knoten bereitgehaltenen Datenobjekten einer Anwendung besteht.

Weiterhin kann in einer Ausführungsform vorgesehen sein, dass ein Datenobjekt eine Liste von Knoten ist, für die unter einer Anwendung Kohärenzobjekte auf den Knoten bereitgehalten werden.

Wie bereits erwähnt, ist es zweckmäßig, dass beim Start einer Anwendung bzw. beim Aufruf eines kohärent zu haltenden Datenobjektes durch eine Anwendung eine automatische Abfrage der übrigen verfügbaren Knoten aus der Liste von Knoten nach der aktuellen kohärenten Instanz des Datenobjektes erfolgt.

Das Kohärenzprotokoll kann insbesondere das MESI-Protokoll umfassen, ohne jedoch darauf beschränkt zu sein.

Zweckmäßig ist es außerdem, wenn die Datenobjekte bzw. die Instanzen der Datenobjekte durch eine Bezeichnung eindeutig gekennzeichnet werden.

Insbesondere könnte die Bezeichnung der Instanz eines Datenobjektes neben ihrem oben genannten eindeutigen Bezeichner auch ihren Speicherort umfassen.

Die Bezeichnung der Instanz eines Datenobjektes kann auch den Knotennamen des Netzelementes, auf welchem es gehalten wird, und einen Objektnamen enthalten. Darüber hinaus kann die Bezeichnung des Objektes den Namen der zugehörigen Anwendung und/oder den Zeitpunkt der letzten Änderung (Schreibvorgang) des Objektes enthalten. Auf diese Weise ergibt sich allein aus der Bezeichnung eines Datenobjektes die Antwort auf die Frage nach der aktuellsten Version und dem aktuellen Speicherort, so dass jeder beliebige andere Knoten allein aus der Bezeichnung des Datenobjekts entnehmen kann, welche der betreffenden Instanzen er bei Bedarf unmittelbar aufrufen bzw. laden kann.

Gemäß einer Ausführungsform der vorliegenden Erfindung ist vorgesehen, dass jedem Kohärenzagenten ein Kohärenzknoten zugeordnet ist, wobei die Kohärenzknoten ein Overlay-Netzwerk bilden und der Kohärenzagent logisch zwischen einer Anwendung und einer lokalen Speicherschnittstelle angeordnet ist und eine Schnittstelle zum Netzwerk bildet. Dabei kann diese Schnittstelle zum Netzwerk auch eine indirekte Schnittstelle sein, in dem der Kohärenzagent noch über einen zwischengeschalteten Kohärenzknoten mit dem Netzwerk verbunden ist, wobei der Kohärenzknoten eine Kohärenzagentenschnittstelle, eine Netzschnittstelle, eine Kohärenzkontrolllogik und einen KohärenzCache aufweist.

Dabei kann der Kohärenzknoten lokal auf dem Rechner des Kohärenzagenten, auf einem entfernten Rechner im Netzwerk und insbesondere auch auf einem Netzwerk-Knoten eines Carriers oder Providers installiert sein.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
Figur 1 ein Blockdiagramm eines sogenannten Kohärenzagenten,
Figur 2 ein Blockdiagramm eines Netzwerkes mit Kohärenzagenten und Kohärenzknoten
Figur 3 ein Blockdiagramm ähnlich wie Figur 2 jedoch mit nicht lokalen Kohärenzknoten,
Figur 4 ein Flussdiagramm des lokalen Öffnens eines kohärent zu haltenden Datenobjektes mit den entsprechenden Vorgängen in einem lokalen Kohärenzknoten,
Figur 5 eine schematische Darstellung eines Kohärenzknotens,
Figur 6 die Methoden und Parametern eines Kohärenzagenten,
Figur 7 eine Netz-Schnittstelle, welche die Kommunikation zwischen Kohärenzknoten auf der Basis von SIP- realisiert und
Figur 8 eine schematische Darstellung eines zu einem Kohärenzknoten gehörenden Kohärenz-Cache.

### Ausführungsbeispiel:

Betrachten wir die Situation, dass eine Gruppe von Personen gemeinsam Informationen in einem Dokument pflegen wollen. Die Personen gehören zum Beispiel zu verschiedenen Firmen, arbeiten in separaten, voneinander unabhängigen (lokalen) Netzwerken und können auf keinen gemeinsamen zentralen File-Server und auch nicht auf einen gemeinsamen Speicher oder Speicheradressraum zugreifen. Dennoch sollten die zusammengetragenen Informationen in ein gemeinsames Dokument, es sei hier eine Excel-Tabelle, eingepflegt werden.

Die im Stand der Technik gängige Vorgehensweise besteht in solchen Fällen darin, dass die Personen sich das Dokument gegenseitig per Email zusenden. Sobald eine Person eine Änderung vorgenommen hat und diese mitteilen möchte, versendet sie das Dokument an die anderen Personen. Gegebenenfalls versichert sich die Person, die ändern möchte, dass sie noch die aktuellste Version vorliegen hat, indem sie die anderen Personen fragt, ob sie noch nicht versandte Änderungen vorgenommen haben. Diese Abfrage ist auch erforderlich, wenn eine der Personen das Dokument nur lesen möchte, aber sicher sein will, dass sie die aktuelle Version vorliegen hat.

Auf diese Weise wird die Kohärenz der einzelnen Kopien der Excel-Tabelle nicht systematisch sichergestellt, sondern muss manuell vor und nach Lese- und Schreib-Operationen manuell durch die operierenden Personen hergestellt werden.

Der im Folgenden beschriebene Kohärenzdienst stellt die Kohärenz zwischen allen Kopien (den sogenannten Instanzen) der Excel-Tabelle (dem sogenannten Kohärenzobjekt) sicher, ohne dass die kooperierenden Personen manuell Dateien versenden müssen. Wir beschreiben hier mehrere Varianten, die sich über zunehmende Funktionalität, aber auch durch zunehmende architektonische Komplexität unterscheiden, die aber jeweils die Kohärenz zwischen den Kopien der Excel-Datei sicherstellen.

### Variante 1 - das Kohärenzdateisystem

Jede der kooperierenden Personen lädt z. B. von einer Webseite, auf der Anwendungen angeboten werden, die den Kohärenzdienst nutzen, eine spezielle Software und installiert diese auf ihrem lokalen Rechner. In unserem Beispiel ist diese Anwendung das sogenannte Kohärenzdateisystem. Dieses stellt die üblichen Funktionalitäten eines Dateisystems bereits, insbesondere zum Schreiben und Lesen von Dateien, organisiert in Verzeichnisbäumen, mit der Besonderheit, dass sich die einzelnen lokalen Instanzen des Kohärenzdateisystems untereinander abgleichen, um einen kohärenten Dateibestand zu realisieren. Auf Windows-Rechnern wird das Kohärenzdateisystem mit einem Laufwerksbuchstaben verbunden, auf UNIX-Rechnern mit einem sogenannten Mountpoint, in anderen Umgebungen bestehen entsprechende Mechanismen.

Aus der Sicht des oben beschriebenen Excel-Anwenders muss vor allem die Excel-Tabelle auf diesem Kohärenzdateisystem, also unter dem entsprechenden Laufwerksbuchstaben oder Mountpoint, gespeichert werden. Danach kann der Anwender die Excel-Datei lesen und schreiben und kann sicher sein, dass sowohl er selbst als auch alle seine Peers auf aktuellen Daten arbeiten.

### Bestandteile und Schnittstellen

Realisiert wird das Kohärenzdateisystem durch einen anwendungsspezifischen Kohärenzagenten, der wiederum das Kohärenznetz verwendet. Jede andere Anwendung wird wiederum durch einen eigenen Agenten realisiert.

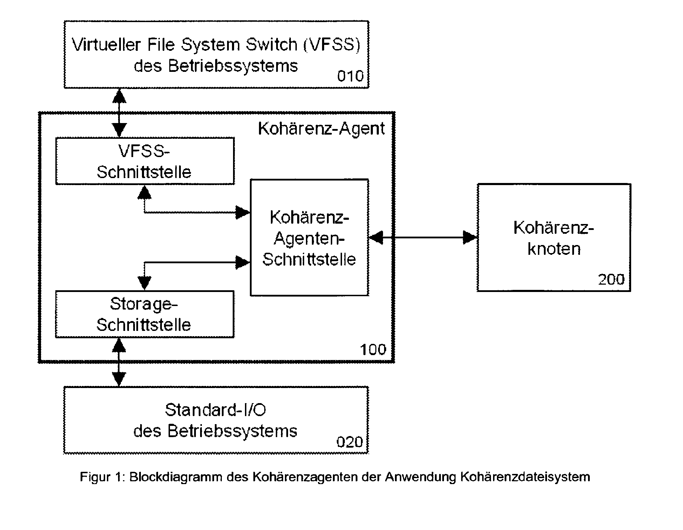

Der Kohärenzagent [100] verfügt über drei Schnittstellen (siehe Figur 1).
1. Die VFSS-Schnittstelle [110] verbindet den Agenten mit dem Virtual File System Switch [010] eines Windows- oder UNIX-Systems, ganz so wie es auch von lokalen Dateisystemen wie NTFS und UFS oder von Netzwerk-Dateisystemen und Protokollen wie Samba/SMB oder NFS realisiert wird. Somit kann das Kohärenzdateisystem von jedem Anwendungsprogramm, das über Standard-1/O arbeitet [020], verwendet werden.
2. Die Storage-Schnittstelle [120] verbindet den Agenten mit einem lokalen Standard-Dateisystem des Rechners, beispielsweise einem Verzeichnis oder einer Partition unter NTFS oder UFS. Auf diese Weise kann das Kohärenzdateisystem Dateien auch tatsächlich speichern.
3. Die Kohärenz-Agenten-Schnittstelle [130] verbindet den Agenten [100] mit einem Kohärenzknoten [200] des Kohärenznetzes. Jeder andere Agent des Kohärenzdateisystems ist ebenfalls mit einem solchen Kohärenzknoten verbunden.

Figur 1 zeigt, wie das Kohärenzdateisystem die direkte Kommunikation zwischen der (unmodifizierten) Anwendung, angebunden über das VFSS-Interface, und dem (unmodifizierten) lokalen Dateisystem, angebunden über das Storage-Interface, unterbricht. Stattdessen wird die Kommunikation über das Kohärenz-Interface [130] umgeleitet. Durch diese Umleitung lässt sich durch Kommunikation über die Kohärenzknoten mit anderen Kohärenzagenten realisieren und sicherstellen, dass ausschließlich kohärente Kopien einer Datei, hier einer Excel-Tabelle, gelesen und geschrieben werden.

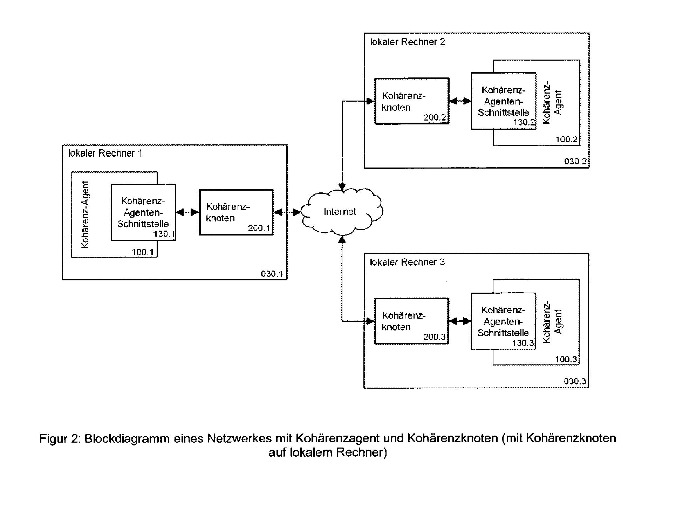

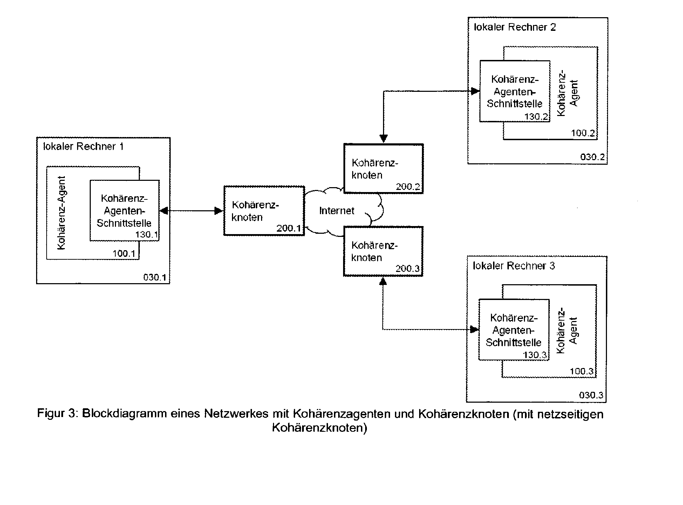

Es sind mehrere Variationen möglich, die Kohärenzknoten netztechnisch zu platzieren - wir nennen diese Eigenschaft Kohärenzgranularität:
1. Die Kohärenzknoten können lokal auf den Rechnern der Anwender installiert sein, siehe Figur 2. Ein solcher lokaler Kohärenzknoten realisiert nur für die Objekte eines Anwenders die Kohärenz und erlaubt den Aufbau kohärenter Anwendungen ohne Beteiligung eines Telekommunikations-Providers oder Carriers.
2. Die Kohärenzknoten können netzseitig, z. B. als Teil des Internets realisiert werden, siehe Figur 3. Typischerweise können solche Topologien durch Telekommunikations-Provider oder Carrier zur Optimierung der Kommunikationsleistung beispielsweise aufgrund geographischer Nähe oder sonstiger guter Verbindung gewählt werden.

Auch Extrem- oder Mischformen sind möglich. Beispielsweise können Kohärenzknoten dediziert für einzelne Anwendungen aufgebaut werden oder im LAN eines Unternehmens lediglich eine Abteilung mit Kohärenz versorgen. Es ist möglich, die Kohärenzgranularität für jeden einzelnen Kohärenzknoten separat festzulegen.

### Funktionsweise - Laden

Im laufenden Betrieb kann der Benutzer einfach seine Dokumente laden und dabei sicher sein, dass er die aktuellste Version geöffnet hat.

### Vorgang bei lokaler Anforderung

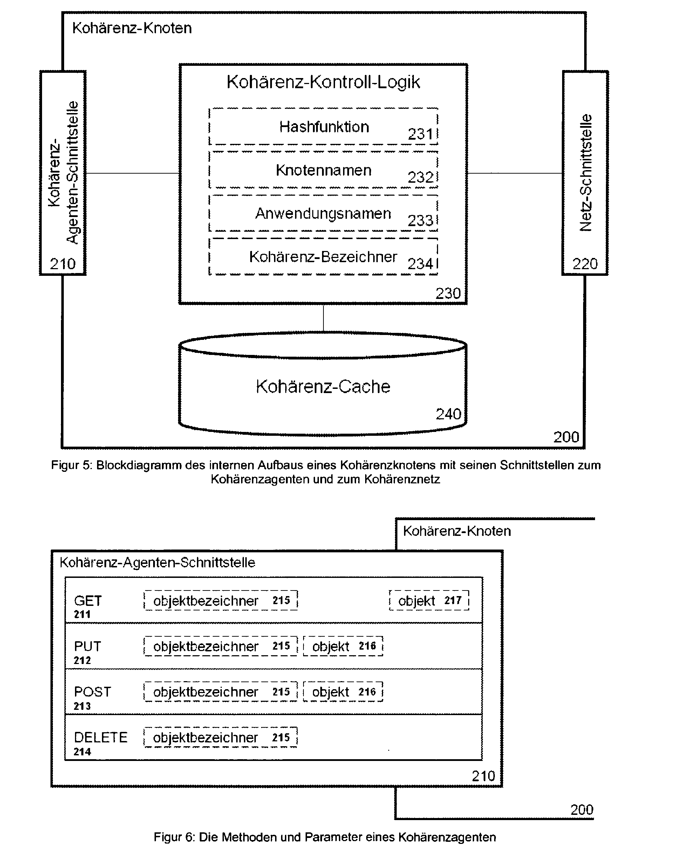

Beschreibung des Vorgangs in einem Kohärenzagenten [100], wenn die Anwendung eine Operation ausführt: In unserem Beispiel ist die Anwendung das Kohärenzdateisystem und die Schnittstelle zum Kohärenzagenten der Virtuelle File System Switch [010] des Betriebssystems. Daher sind die Operationen für alle Betriebssysteme im Stand der Technik bekannt. Wir betrachten die Operation, eine Datei zu öffnen. Diese Operation trägt als Parameter einen Dateinamen, typischerweise inklusive eines Dateipfades in einer Verzeichnisstruktur, und ist als solcher eindeutig; wir definieren die Gesamtheit als den "Dateinamen" (siehe Figur 6). Mit diesem Dateinamen als Objektbezeichner [215] ruft in unserem Beispiel die Kohärenz-Agenten-Schnittstelle [130] (siehe Figur 1) des Kohärenzagenten [100] (siehe Figur 1) die Methode GET [211] (siehe Figur 6) des Kohärenz-Knotens [200] (siehe Figur 1) auf. Der Objektbezeichner ist Teil der Metadaten.

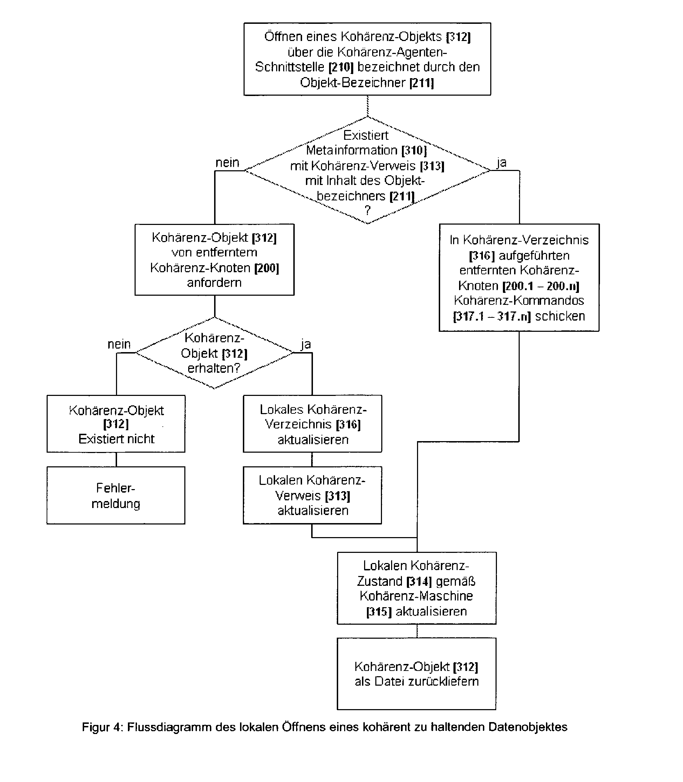

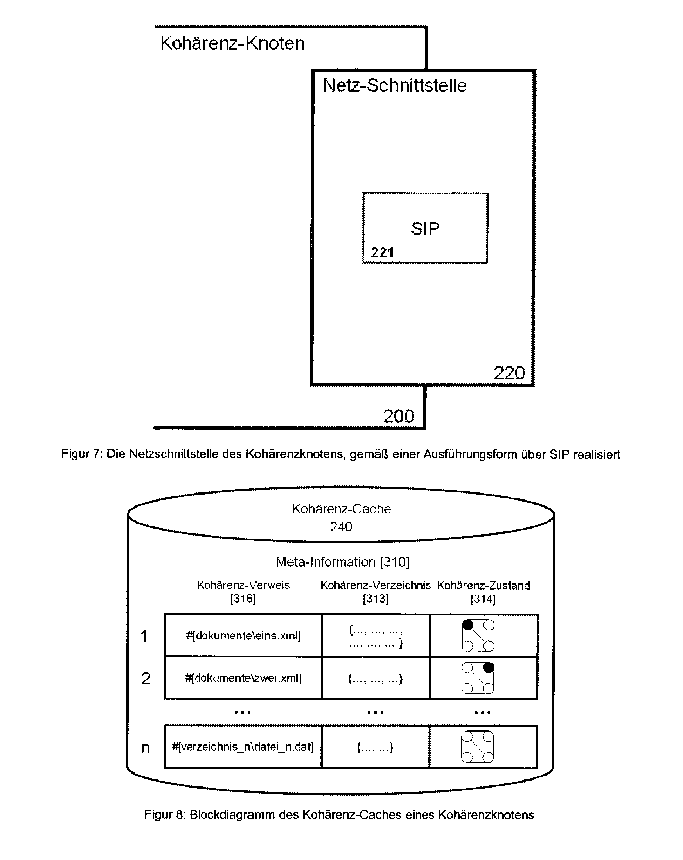

Figur 4 beschreibt den Vorgang in einem Kohärenzknoten [200] (siehe Figur 1), wenn über die Kohärenz-Agenten-Schnittstelle [210] (siehe Figur 5) ein Aufruf einer der vier Methoden [211-214] (siehe Figur 6) dieser Schnittstelle [210] (siehe Figur 5) durchgeführt wird: In diesem Beispiel wird die Methode GET [211] (siehe Figur 6) mit einem Objektbezeichner [215] (siehe Figur 6) aufgerufen. Dieser Objektbezeichner wird über die Hashfunktion [231] (siehe Figur 5) der Kohärenz-Kontrolllogik [230] (siehe Figur 5) auf einen Kohärenz-Verweis [316] (siehe Figur 8) abgebildet. Durch die Zuordnung Objektbezeichner [215] und die Hashfunktion [231], den Knotennamen [232], den Anwendungsnamen [233], den Kohärenzbezeichner [234] und den Metainformationen [310] zu den Objekten werden in diesem Ausführungsbeispiel eineindeutig die Metadaten zu diesen Objekten erzeugt und zugeordnet. Die Kontrolllogik [230] (siehe Figur 5) prüft, ob in den Meta-Informationen [310] (siehe Figur 5) des Kohärenz-Caches [240] (siehe Figur 5) ein solcher Kohärenz-Verweis [316] (siehe Figur 5) enthalten ist.

Erklärung: Die Kohärenz-Metainformationen [310] (siehe Figur 5) innerhalb des Kohärenz-Caches [240] (siehe Figur 5) des Kohärenzknotens [200] (siehe Figur 1) bestehen aus drei Teilen, siehe Abbildung 8:
1. Der Kohärenz-Verweis [316] ist ein innerhalb des Kohärenz-Caches [240] eindeutiger Schlüssel zu einem Kohärenz-Objekt des Kohärenz-Agenten. Der Verweis wird durch eine Hashfunktion [231] der Cache-Kontrolllogik [230] aus einem Objektbezeichner [215] gebildet.
2. Das Kohärenz-Verzeichnis [313] zu einem Kohärenz-Verweis [316] enthält eine Liste derjenigen anderen Kohärenzknoten ([220.2] und [200.3] in Abbildung 3), die Instanzen des durch [316] referenzierten Kohärenz-Objektes speichern. Somit definiert das Verzeichnis [313] die jeweils aktuelle Topologie der Verschränkung von Objektinstanzen. Die Verwendung von verzeichnisbasierter Kohärenz entspricht dem Stand der Technik.
3. Der Kohärenz-Zustand [314] ist einer der Zustände entsprechend einem Zustandsautomaten, der sogenannten Kohärenz-Maschine. Die Kohärenzmaschinen einzelner Knoten ändern ihre Zustände kohärent gemäß einem Synchronisationsverfahren, dem sogenannten Kohärenzprotokoll. Solche Protokolle entsprechen dem Stand der Technik; bekanntes Beispiel für ein solches Protokoll ist das MESI-Protokoll.

Wenn ein solcher Eintrag mit passendem Verweis [316] vorhanden ist, so wird von der Logik [230] geprüft, ob der zugeordnete Kohärenz-Zustand [314] einen Wert gültiger Kohärenz hat:
- Entweder: Wenn das durch Verweis [316] bezeichnete Objekt noch kohärent ist - im oben genannten Beispiel des MESI-Protokolls wären das die Zustände M, E und S - so liefert die Methode GET [211] der Schnittstelle [210] dem aufrufenden Agenten eine leere Antwort zurück, d. h. eine Antwort mit einem leeren Objekt [217]. Der Agent verwendet darauf hin seine eigene Kopie des Objektes - im Beispiel des Kohärenzdateisystems lädt er sie über Schnittstelle [120] aus dem "normalen" Dateisystem des lokalen Rechners - und liefert sie an die Anwendung aus - im Beispiel des Kohärenzdateisystems über die Schnittstelle [110].
- Oder: Wenn das durch Verweis [316] bezeichnete Objekt nicht mehr kohärent ist, - im oben genannten Beispiel des MESI-Protokolls wäre das der Zustand I - so lädt der Kohärenzknoten eine kohärente Kopie des Kohärenzobjektes aus dem Kohärenznetz durch eine entfernte Anforderung (s.u.) über die Netz-Schnittstelle [220]. Diese Kopie wird als Objekt [217] über die Schnittstelle [210] an den Agenten zurückgeliefert. Der Agent aktualisiert seine eigene Kopie und liefert das kohärente Objekt an die Anwendung aus.

Der Vorgangsanteil bei lokaler Anforderung innerhalb des Kohärenzknotens ist als Kontrollflussdiagramm in Figur 4 dargestellt.

Das Konzept, mit Zustandsautomaten und Verzeichnissen Kohärenz herzustellen, ist zwar Stand der Technik, wie beispielsweise in DE 103 41 563 A1 offenbart, ist aber auf Speicherkopplung beschränkt. Die hiesige Erfindung basiert darauf und realisiert einen Kohärenzdienst für Next Generation Networks und Future Internet.

### Vorgang bei entfernter Anforderung

Es folgt die Beschreibung des Vorgangs in einem Kohärenzknoten [200], wenn über die Netz-Schnittstelle [220] ein Aufruf durchgeführt wird: Die Kohärenzkommunikation wird über die SIP-Methode [221] (siehe Figur 7) der Netz-Schnittstelle [220] versendet und über SIP als Transportschicht getunnelt; SIP (Session Initialization Protocol) ist Fachleuten auf diesem Gebiet bekannt und in RFC 3261 spezifiziert. Durch Verwendung der SIP-Infrastruktur des Netzes, wie beispielsweise dem IMS (Internet Multimedia Subsystem) ist Adressierung und Erreichbarkeit entfernter Kohärenzknoten auch bei mobilen Benutzern und Sicherheitsmaßnahmen wie Firewalls sichergestellt und gleichzeitig eine gute Performance beim Transport über das IP-Netz sichergestellt. Die konkrete Ausprägung der Kohärenzkommunikation wird in den Feldern "Content-Type" und der SDP-Beschreibung über 'c='-Connection- und 'a='-Attribut-Felder codiert. Das SDP (Session Description Protocol) ist in RFC 2327 spezifiziert.

Der Vorgangsanteil bei entfernter Anforderung innerhalb eines Kohärenzknotens verläuft analog zur lokalen Anforderung und ist insoweit an sich bekannt. Jedoch gibt es im vorliegenden Fall eine Besonderheit der vorliegenden Erfindung: Der relevante entfernte Knoten wird folgendermaßen festgestellt. Aus dem Objektbezeichner [215] wird über die Hashfunktion [231] der Kohärenz-Verweis [316] generiert und über den Knotennamen [232] und Anwendungsnamen [233] der Kontrolllogik [230] der über das gesamte Kohärenznetz eindeutige Kohärenz-Bezeichner [234] generiert. Dieser hat gemäß einer Ausführungsform die Struktur
coherence://sipserver//application/path/name
Dabei ist sipserver der Knotenname als SIP-Adresse, application der Anwendungsname und path/name der Kohärenzverweis [316].

Analog zur Signalisierung des Kohärenzprotokolls über SIP geschieht der Transport der von Knoten zu Knoten zu übertragenden Kohärenzobjekte innerhalb der durch das SIP-Handshake ausgehandelten Media-Session über RTP; Realtime Transport Protocol ist in RFC 3550 spezifiziert. Zusammengefasst stellen wir SIP-basierte Kohärenz über das Internet zur Verfügung. Dies ist nicht analog zu Parallelrechnern und zeichnet die vorliegende Erfindung gegenüber dem Stand der Technik aus.

### Funktionsweise - Speichern

Sobald der Benutzer seine Datei wieder speichert, ist sichergestellt, dass alle anderen Benutzer (und er selbst) beim nächsten Laden der Datei diese somit aktuellste Version geöffnet bekommen. Die Vorgänge beim Speichern laufen analog zum Laden zwischen Kohärenzagent [100] und Kohärenzknoten [200] ab.

Im Beispiel des Kohärenzdateisystems ergeben sich durch die bekannten Standard-Operationen auf Dateien Locking-Szenarien derart, dass beispielsweise nur der erste Benutzer Dateien zum Lesen und Schreiben öffnen kann, weitere Benutzer jedoch die Dateien nur zum Lesen öffnen können, damit sich keine Inkonsistenzen bilden.

### Funktionsweise - Initialisierung

Die einzelnen Kohärenzagenten sind untereinander über das Kohärenznetz, in unserem o. g. Beispiel (siehe Figur 3) bestehend aus den genannten drei Teilnehmern, verbunden. Dieses Kohärenznetz besteht aus ausgezeichneten Netzelementen, nämlich den Kohärenzknoten, welche mit den Kohärenzagenten und anderen Kohärenzknoten verbunden sind, und den Kohärenzverkehr vermitteln und transportieren. Der Anwender des Kohärenzagenten, beispielsweise des Kohärenzdateisystems pflegt eine Liste mit den anderen Anwendern, mit denen er gemeinsam Dokumente bearbeiten möchte. Diese Arten der Zugriffssteuerung entsprechen einer üblichen Zugriffssteuerung auf Dateisystemen und zentralen Fileservern.

### Variante 2 - aktive Dokumente

Höher spezialisierte Realisierungen erlauben noch bessere Verfahren, welche die Dokumente während der simultanen Bearbeitung durch mehrere Personen kohärent halten. Kohärenz-Plugins in dafür geeigneten Anwendungen, wie die Microsoft Office-Anwendungen mit ihrer Fähigkeit, DCOM-Server einzubetten, erlauben es, die Dokumente als sogenannte aktive Kohärenzdokumente, die gemeinsamen Eingaben instantan und ohne separate Speichervorgänge kohärent zu halten. In einer Excel-Tabelle kann somit die Kohärenz auf Zellen-Ebene verbessert werden.

## Patentansprüche

1. Verfahren zum Bereitstellen von Kohärenz zwischen Instanzen von Datenobjekten, die auf verteilten Knoten eines nicht speichergekoppelten Netzwerkes residieren, **dadurch gekennzeichnet, dass** zu jeder von einem Knoten bearbeiteten Instanz eines Datenobjektes plattformunabhängige, eindeutige Metadaten erzeugt werden und mit Hilfe dieser Metadaten und einem Kohärenzprotokoll, welches auf diesen Metadaten operiert, die Metadaten und somit die Datenobjekte kohärent gehalten werden.

2. Verfahren nach Anspruch 1, **dadurch gekennzeichnet, dass** in den Metadaten eine dem Kohärenzprotokoll entsprechender Zustandsautomat enthalten ist.

3. Verfahren nach Anspruch 2, **dadurch gekennzeichnet, dass** durch das Kohärenzprotokoll Zustandsübergänge der Zustandsautomaten sowie die zugehörigen auf den Datenobjekten ausgeführten Operationen (Lesen, Schreiben, Löschen, ...) mindestens zwischen allen eine Instanz des jeweiligen Datenobjektes haltenden Knoten des Netzwerkes kommuniziert werden.

4. Verfahren nach einem der Ansprüche 1 bis 3, **dadurch gekennzeichnet, dass** jede Instanz eines Datenobjektes Verweise auf alle Knoten enthält, die ihrerseits eine Instanz dieses Datenobjektes halten.

5. Verfahren nach einem der Ansprüche 1 bis 4, **dadurch gekennzeichnet, dass** zu jedem Datenobjekt ein Kohärenzobjekt vorgesehen ist, welches eine Liste von den auf den Knoten bereitgehaltenen Datenobjekten einer Anwendung ist.

6. Verfahren nach einem der Ansprüche 1 bis 5, **dadurch gekennzeichnet, dass** die das Kohärenzprotokoll verwendenden Knoten ein Overlay-Netzwerk bilden, wobei vorzugsweise ein das Overlay-Netzwerk definierender Dienst vorgesehen ist, der eine Anforderung und Übermittlung von Datenobjekten zwischen mindestens einem Teil der Knoten des Overlay-Netzwerkes erlaubt, wobei wiederum vorzugsweise das dem Overlay-Netzwerk zugrundeliegende Netz das Internetprotokoll verwendet.

7. Verfahren nach Anspruch 6, **dadurch gekennzeichnet, dass** der Dienst ein Teil eines Anwendungsprogramms für die Datenobjekte ist und/oder eine Schnittstelle zwischen einem Knoten und dem Netzwerk definiert.

8. Verfahren nach einem der Ansprüche 1 bis 7, **dadurch gekennzeichnet, dass** das Kohärenzprotokoll eine Kommunikation unter Verwendung des Session Initiation Protokoll (SIP)-Standard oder des http-Standard realisiert.

9. Verfahren nach einem der Ansprüche 1 bis 8, **dadurch gekennzeichnet, dass** das Datenobjekt jeweils unter mindestens einer Anwendung ein vollständiges Datenobjekt ist und/oder dass die Anwendung für das Datenobjekt mindestens eine sequenzielle Darstellungsform definiert.

10. Verfahren nach einem der Ansprüche 1 bis 9, **dadurch gekennzeichnet, dass** die Datenobjekte Java-, .NET-, COM- oder XML-Objekte sind.

11. Verfahren nach einem der Ansprüche 1 bis 10, **dadurch gekennzeichnet, dass** bei jedem Aufruf eines kohärent zu haltenden Datenobjektes durch eine Anwendung einer automatischen Abfrage der übrigen verfügbaren Knoten des Netzwerkes aus der Liste des Kohärenzobjektes nach der aktuellen kohärenten Instanz des Datenobjektes erfolgt.

12. Verfahren nach einem der Ansprüche 1 bis 11, **dadurch gekennzeichnet, dass** das Kohärenzprotokoll ein invalidierendes Protokoll, wie z. B. MSI, MOSI, MESI, MOESI oder ein update basiertes Protokoll wie zum Beispiel SYNAPSE oder DRAGON umfasst.

13. Verfahren nach einem der Ansprüche 1 bis 12, **dadurch gekennzeichnet, dass** die Bezeichnung der Instanz eines Datenobjektes neben den Protokolldaten auch ihren Speicherort umfasst und/oder die Bezeichnung des Datenobjektes eindeutig ist.

14. Verfahren nach einem der vorstehenden Ansprüche, **dadurch gekennzeichnet, dass** die Bezeichnung des Datenobjektes den Knotennamen des Netzelementes, auf welchem es gehalten wird und einen Objektnamen enthält und/oder dass die Bezeichnung der Instanz des Datenobjektes den Namen der zugehörigen Anwendung und/oder den Zeitpunkt der letzten Änderung (Schreibvorgang) enthält.

15. Verfahren nach einem der vorstehenden Ansprüche, **dadurch gekennzeichnet, dass** die Anwendung für das Datenobjekt eine unmittelbare Kommunikation zwischen mehreren, je eine Instanz desselben Datenobjektes gleichzeitig modifizierenden Knoten vorsieht.

16. Verfahren nach einem der vorstehenden Ansprüche, **dadurch gekennzeichnet, dass** das Datenobjekt mindestens eines der folgenden Objekte ist: Textdokument, Grafik, Tabelle, Audiodatei, Videodatei, Streamsegment, Element eines Softwareprogramms oder Unterprogramms (Programmroutine).

17. Verfahren nach einem der vorstehenden Ansprüche, **dadurch gekennzeichnet, dass** jeder Knoten einen Kohärenzagenten aufweist, der logisch zwischen einer Anwendung und einer lokalen Speicherschnittstelle angeordnet ist und eine Schnittstelle zum Netzwerk bildet, wobei der Kohärenzagent vorzugsweise über einen Kohärenzknoten mit dem Netzwerk verbunden ist, und der Kohärenzknoten vorzugsweise eine Kohärenzagentenschnittstelle, eine Netzschnittstelle, eine Kohärenzkontrolllogik und einen Kohärenz-Cache aufweist.

18. Verfahren nach Anspruch 17, **dadurch gekennzeichnet, dass** der Kohärenzknoten ein auf dem Knoten des Kohärenzagenten lokal installierter Kohärenzknoten und/oder ein auf dem Netzwerk bzw. einem anderem anderen Knoten des Netzwerkes, insbesondere einem Provider- oder Carrierknoten installierter Kohärenzknoten ist.

19. Programm zum Bereitstellen der Kohärenz zwischen Instanzen von Datenobjekten, die auf verteilten Knoten eines nicht speichergekoppelten Netzwerkes residieren, **dadurch gekennzeichnet, dass** das Programm für die Ausführung eines Verfahrens nach einem der Ansprüche 1 bis 18 ausgestaltet ist.

20. Datenträger, **dadurch gekennzeichnet, dass** er ein Programm nach Anspruch 19 trägt.

## Claims

1. A method of providing coherence between instances of data objects residing on distributed nodes of a non memory-coupled network, **characterised in that** for each instance of a data object that is processed by a node platform-independent unique metadata are generated and by means of said metadata and a coherence protocol which operates on said metadata the metadata and thus the data objects are kept coherent.

2. A method as set forth in claim 1 **characterised in that** a state machine corresponding to the coherence protocol is contained in the metadata.

3. A method as set forth in claim 2 **characterised in that** state transitions of the state machines and the associated operations performed on the data objects (reading, writing, erasing, ...) are communicated by the coherence protocol at least between all nodes of the network, that hold n instance of the respective data object.

4. A method as set forth in one of claim 1 through 3 **characterised in that** each instance of a data object contains references to all nodes which in turn hold an instance of said data object.

5. A method as set forth in one of claims 1 through 4 **characterised in that** for each data object there is provided a coherence object which is a list of the data objects of an application, that are held ready on the nodes.

6. A method as set forth in one of claims 1 through 5 **characterised in that** the nodes using the coherence protocol form an overlay network, wherein there is preferably provided an overlay network defining service is provided which allows a demand and communication of data objects between at least a part of the nodes of the overlay network, whereas in turn the net on which the overlay network is based uses the Internet protocol.

7. A method as set forth in claim 6, **characterised in that** the service is a part of an application program for the data objects and/or defines an interface between a node and the network.

8. A method as set forth in one of claims 1 to 7, **characterised in that** the coherence protocol implements a communication using the session initiation protocol (SIP) standard or http standard.

9. A method as set forth in one of claims 1 through 8, **characterised in that** the data object is respectively a complete data object under at least one application and/or the application defines at least one sequential representation form for the data object.

10. A method as set forth in one of claims 1 through 9, **characterised in that** the data objects are Java, .NET, COM or XML objects.

11. A method as set forth in one of claims 1 through 14 **characterised in that** upon each call-up of a data object which is to be kept coherent by an application of an automatic query of the other available nodes of the network from the list of the coherence object is effected in accordance with the current coherent instance of the data object.

12. A method as set forth in one of claims 1 through 15 **characterised in that** the coherence protocol includes an invalidating protocol such as for example MSI, MOSI, MESI, MOESI or an update based protocol such as for example SYNAPSE or DRAGON.

13. A method as set forth in one of claims 1 through 16 **characterised in that** the identification of the instance of a data object besides the protocol data also includes its memory location and/or the identification of the data object is unique.

14. A method as set forth in one of the preceding claims **characterised in that** the identification of the data object contains the node name of the net element on which it is held and an object name and/or the identification of the instance of the data object includes the name of the associated application and/or the time of the last change (writing operation).

15. A method as set forth in one of the preceding claims **characterised in that** the application for the data object provides a direct communication between a plurality of nodes which simultaneously modify a respective instance of the same data object.

16. A method as set forth in one of the preceding claims **characterised in that** the data object is at least one of the following objects: text document, graphics, table, audio file, video file, stream segment, element of a software program or subprogram (program routine).

17. A method as set forth in one of the preceding claims **characterised in that** each node has coherence agent which is logically arranged between an application and a local memory interface and forms an interface to the network, wherein the coherence agent is connected to the network by way of a coherence node, wherein the coherence node preferably has a coherence agent interface, a net interface, a coherence control logic and a coherence cache.

18. A method as set forth in claim 25 **characterised in that** the coherence node is a coherence node locally installed on the node of the coherence agent and/or a coherence node installed on the network or another node of the network, in particular a provider or carrier node.

19. A program for providing coherence between instances of data objects residing on distributed nodes of a non memory-coupled network, **characterised in that** the program is adapted to execute a method as set forth in one of claim 1 through 18.

20. A data carrier **characterised in that** it carries a program as set forth in claim 19.

## Revendications

1. Procédé de fourniture de cohérence entre des instances d'objets de données qui résident sur des noeuds répartis d'un réseau de mémoire non couplé **caractérisé en ce qu'**à chaque instance d'un objet de données, traitée par un noeud, des métadonnées univoques, indépendantes de la plate-forme sont produites, et **en ce qu'**à l'aide de ces métadonnées et d'un protocole de cohérence opérant sur ces métadonnées, les métadonnées et, de ce fait, les objets de données sont maintenus cohérents.

2. Procédé selon la revendication 1 **caractérisé en ce qu'**un automate à états finis correspondant au protocole de cohérence est contenu dans les métadonnées.

3. Procédé selon la revendication 2 **caractérisé en ce que** des transitions d'états des automates à états finis ainsi que les opérations correspondantes réalisées sur les objets de données (lecture, écriture, suppression,...) sont communiquées au moyen du protocole de cohérence au moins entre tous les noeuds du réseau maintenant une instance de l'objet de données respectif.

4. Procédé selon l'une des revendications 1 à 3 **caractérisé en ce que** chaque instance d'un objet de données contient des renvois sur tous les noeuds, qui de leur côté maintiennent une instance de cet objet de données.

5. Procédé selon l'une des revendications 1 à 4 **caractérisé en ce que** qu'à chaque objet de données, un objet de cohérence, qui est une liste des objets de données tenus à disposition sur les noeuds d'une application, est prévu.

6. Procédé selon l'une des revendications 1 à 5 **caractérisé en ce que** les noeuds utilisant le protocole de cohérence forment un réseau superposé (overlay), un service définissant le réseau superposé étant prévu de préférence, service qui permet une demande et une transmission d'objets de données entre au moins une partie des noeuds du réseau superposé, le réseau sous-jacent au réseau superposé utilisant de préférence à son tour le protocole internet.

7. Procédé selon la revendication 6 **caractérisé en ce que** le service est une partie d'un programme d'application pour les objets de données et/ou définit une interface entre un noeud et le réseau.

8. Procédé selon l'une des revendications 1 à 7 **caractérisé en ce que** le protocole de cohérence réalise une communication en utilisant le protocole standard SIP (Session Initiation Protocol) ou le protocole standard http.

9. Procédé selon l'une des revendications 1 à 8 **caractérisé en ce que** l'objet de données respectivement sous au moins une application est un objet de données complet et/ou **en ce que** l'application pour l'objet de données définit au moins une forme de représentation séquentielle.

10. Procédé selon l'une des revendications 1 à 9 **caractérisé en ce que** les objets de données sont des objets Java, NET, COM ou XML.

11. Procédé selon l'une des revendications 1 à 10 **caractérisé en ce qu'**il a lieu lors de chaque appel d'un objet de données à maintenir cohérent par une application d'une interrogation automatique des noeuds disponibles restants du réseau à partir de la liste de l'objet de cohérence d'après l'instance actuelle cohérente de l'objet de données.

12. Procédé selon l'une des revendications 1 à 11 **caractérisé en ce que** le protocole de cohérence comprend un protocole invalidant tel que MSI, MOSI, MESI, MOESI ou un protocole basé sur la mise à jour tel que SYNAPSE ou DRAGON.

13. Procédé selon l'une des revendications 1 à 12 **caractérisé en ce que** la désignation de l'instance d'un objet de données comprend également son emplacement d'enregistrement outre les données de protocole et/ou que la désignation de l'objet de données est univoque.

14. Procédé selon l'une des revendications précédentes **caractérisé en ce que** la désignation de l'objet de données contient le nom du noeud de l'élément de réseau sur lequel l'objet de données est maintenu et un nom d'objet et/ou **en ce que** la désignation de l'instance de l'objet de données contient la nom de l'application correspondante et/ou le moment de la dernière modification (processus d'écriture).

15. Procédé selon l'une des revendications précédentes **caractérisé en ce que** l'application pour l'objet de données prévoit une communication immédiate entre plusieurs noeuds modifiant chacun simultanément une instance du même objet de données.

16. Procédé selon l'une des revendications précédentes **caractérisé en ce que** l'objet de données est au moins l'un des objets suivants : document texte, graphique, tableau, fichier audio, fichier vidéo, segment de flux, élément d'un programme de logiciel ou d'un sous-programme (routine de programme).

17. Procédé selon l'une des revendications précédentes **caractérisé en ce que** chaque noeud comprend un agent de cohérence qui est disposé logiquement entre une application et une interface d'enregistrement locale et qui forme une interface pour le réseau, l'agent de cohérence étant de préférence connecté au réseau via un noeud de cohérence, et le noeud de cohérence comprenant de préférence une interface d'agent de cohérence, une interface de réseau, une logique de contrôle de cohérence et un cache de cohérence.

18. Procédé selon la revendication 17 **caractérisé en ce que** le noeud de cohérence est un noeud de cohérence installé localement sur le noeud de l'agent de cohérence et/ou un noeud de cohérence installé sur le réseau ou sur un autre noeud du réseau, notamment un noeud fournisseur ou un noeud porteur.

19. Programme de fourniture de cohérence entre des instances d'objets de données qui résident sur des noeuds répartis d'un réseau de mémoire non couplé **caractérisé en ce que** le programme est conçu pour l'exécution d'un procédé selon l'une des revendications 1 à 18.

20. Support de données **caractérisé en ce qu'**il comporte un programme selon la revendication 19.
